# FASCICULE DE BREVET EUROPEEN

(11) **EP 0 714 075 B1**
(45) Date de publication et mention de la délivrance du brevet: **26.02.2003**
(21) Numéro de dépôt: 95402614.2
(22) Date de dépôt: 21.11.1995
(51) Int. Cl.: G06K 17/00

(54) **Terminal sécurisé multifonction de saisie et de traitement, utilisable notamment dans les domaines bancaire, de jeux et de la gestion électronique de documents**
Multifunktion-gesichertes Erfassungs- und Verarbeitungsterminalgerät zur Verwendung insbesondere im Bank-, Spiel- und elektronischen Dokumentverwaltungsbereich
Multifunction secured terminal for acquisition and processing, to be used especially in the fields of banking, gaming and electronic managing of documents

(30) Priorité: 23.11.1994 FR 9414020
(43) Date de publication de la demande: 29.05.1996
(73) Titulaire: Gatto, Jean-Marie, London SW1X 9PP (GB); Bertrand, Dominique, Morley 6062 WA (AU)
(72) Inventeur: Gatto, Jean-Marie, London SW1X 9PP (GB); Bertrand, Dominique, Morley 6062 WA (AU)
(74) Mandataire: Dubois-Chabert, Guy

(56) Documents cités:
- EP-A- 0 339 154
- EP-A- 0 487 113
- EP-A- 0 508 869
- EP-A- 0 587 484
- FR-A- 2 407 518
- FR-A- 2 664 138

## Description

### Domaine technique

La présente invention concerne un terminal sécurisé multifonction de saisie et de traitement, utilisable notamment dans le domaine bancaire, dans le domaine des jeux et dans le domaine de la gestion électronique de documents.

### Etat de la technique antérieure

Un terminal bancaire est particulièrement adapté à la saisie de documents, de chèques ou de toute pièce administrative à usage courant dans une banque. Un tel terminal permet bien évidemment la saisie de tout formulaire bancaire ou autre avec zone à cocher, ou même seulement avec zone d'écriture.

Un tel terminal, s'il existe, est soit encombrant, soit cher, soit est un assemblage d'éléments disparates du commerce souvent chers et mal adaptés et ne comporte pas d'éléments de saisie directe de document.

La présente invention a donc pour but de réaliser un terminal particulièrement adapté à toutes ces opérations (rapide, fiable...), sécurisé et à moindre coût.

Les terminaux avant l'invention sont souvent des assemblages disparates, comportant dans certains cas plusieurs microprocesseurs associés entre eux et/ou qui, pour la plupart, ne sont pas utilisés dans une architecture standard, mais dans des configurations dites "spécifiques intelligentes" gérant la plupart des entrées/sorties.

Souvent ils n'ont pas de scanner, les informations étant saisies à la main.

D'autres terminaux avant l'invention peuvent posséder des scanners mais présentent l'inconvénient d'être développés quasi spécifiquement.

Ceux comportant un scanner sont très chers, lents, monochromes, simple face, et à deux niveaux de gris (noir, blanc), et de mise en oeuvre très complexe.

Un but particulier de l'invention est de procurer un moyen de saisie directement notamment grâce à un scanner rapide, simple ou double face et/ou couleur avec palette étendue de niveaux, et de résolution excellente tant pour la définition horizontale et verticale que pour celle des niveaux de couleur, associé à une excellente linéarité, grâce notamment à un circuit spécifique utilisé dans la partie dite "spécifique" décrite ultérieurement.

La présente invention a surtout pour but :
- d'une part de réduire cette partie spécifique à son strict minimum ; et
- par ailleurs d'utiliser au maximum des composants standards du marché de manière à rendre le terminal ainsi réalisé compact, peu coûteux, fiable et simple à mettre en oeuvre.

### Exposé de l'invention

La présente invention propose un terminal tel que défini à la revendication 1.

La revendication 1 a été délimitée par rapport à FR-A-2 664 138.

Dans un premier mode de réalisation, ces modules sont disposés sur une même carte, y compris le ou les microprocesseurs standard, le ou les bus, et les entrées/sorties auxiliaires, cette carte se substituant à la carte mère.

Dans un second mode de réalisation les modules forment des cartes séparées, la carte mère étant standard.

Avantageusement les fonctions spécifiques comprennent au moins un scanner et sa gestion associée, un lecteur de carte à puce, un lecteur de puce de sécurisation, un lecteur de piste magnétique, un lecteur optique ; au moins un écran LCD ("Liquid Crystal Display" ou dispositif d'affichage à cristaux liquides) ; au moins un clavier tactile ou non, de la mémoire Flash et sa gestion, de la mémoire SRAM ("Static Random Access Memory" ou mémoire statique à accès aléatoire), une imprimante soit à jet d'encre, soit thermique, ou autre, un crayon optique WAND (crayon optique manuel), une surface tactile et sa gestion.

Avantageusement le terminal est réalisé dans un coffret de forme parallélépipédique, formé de la liaison d'une partie supérieure et d'une partie inférieure, dans lequel est disposée une carte mère standard à laquelle peuvent être connectées des cartes filles grâce au bus standard

Avantageusement un bac de blindage électromagnétique est formé de plusieurs éléments : un élément principal, une première face percée d'ouvertures permettant de laisser passer les connecteurs d'entrées/sorties desdites cartes, une seconde face découpée de sorte à laisser la place aux connecteurs de la carte mère, une troisième face de ce bac étant formée de la partie inférieure du coffret qui forme une porte amovible rendant facilement accessible toute manipulation ou changement de carte.

Avantageusement ce coffret comprend une porte d'accès latéral permettant de laisser passer les câbles de liaison, à l'arrière du terminal, pour toutes liaison avec une imprimante, un réseau ou autre.....

Avantageusement le coffret contient également au moins une alimentation, au moins un lecteur de disque dur, au moins un lecteur de "floppy disk".

Avantageusement un écran LCD, un lecteur de piste magnétique et/ou un lecteur optique, un clavier à touches et/ou tactile, un scanner, un lecteur de carte à puce, un lecteur de puce de sécurisation, un lecteur PCMCIA ("Pocket Computer Memory Card Interface Adapter" ou adaptateur d'interface de carte à mémoire pour ordinateur de poche), un bouton arrêt-marche sont disposés conjointement à ce coffret.

Avantageusement tous ces éléments sont amovibles.

Dans une réalisation avantageuse l'écran LCD comporte une surface sensible, tactile qui peut être ajoutée au clavier. Cette surface sensible permet notamment, grâce à la possibilité quasi-infini d'affichage de l'écran LCD de réaliser tout type de touche ou de saisie : par exemple une saisie graphique. Elle permet de localiser n'importe quel point de l'écran et d'effectuer tout traitement adéquat.

Avantageusement l'écran LCD est fixé au coffret à l'aide d'un moyen mobile par exemple autour de deux axes de rotation, ce qui permet entre autres d'avoir, en position fermée, cet écran positionné sur la surface supérieure du coffret et par conséquent protégé, et en position ouverte, d'avoir cet écran en position oblique réglable permettant une lecture aisée par l'utilisateur.

Dans une variante de réalisation l'écran est fixé sur la face arrière du coffret par des moyens le rendant mobile et lui permettant d'être protégé en position "fermée".

Avantageusement le lecteur de piste magnétique, de forme allongée, comporte une glissière dans laquelle peut être lue une carte magnétique par glissement. Un lecteur optique peut également être disposé dans la même glissière.

Avantageusement le clavier à touches ou tactile est formé d'une armature métallique contre laquelle est apposé un circuit imprimé comportant les touches. Ce clavier est facilement amovible et peut être un module complètement indépendant. Il peut être protégé par une membrane étanche.

Avantageusement le scanner est un scanner recto et/ou verso, et/ou couleur, de forme allongée et peu encombrant. Avantageusement son diamètre est inférieur à 60 mm. Il est facilement amovible et peut être un module complètement indépendant.

Avantageusement le scanner comprend au moins un capteur CIS ("Contact Image Sensor" ou lecteur d'image à contact) ou NCIS ("No Contact Image Sensor" ou lecteur d'image sans contact), et/ou CCD ("Charge Coupled Device" ou dispositif à couplage de charge).

Avantageusement le terminal comprend un bac de réception des documents après lecture par le scanner.

Dans une variante de réalisation le lecteur de piste magnétique et/ou le lecteur optique, le lecteur de puce de sécurisation, le lecteur de carte à puce sont situés dans le même ensemble que le clavier. Avantageusement, alors, le circuit imprimé unique peut gérer soit le clavier, soit le (ou les) lecteur(s), le (ou les) écran(s), ou l'ensemble.

Avantageusement le clavier peut alors comprendre une liaison optique et/ou électrique vers le scanner, une liaison optique et/ou électrique vers l'écran, et une liaison optique et/ou électrique vers le coffret.

La liaison optique s'effectue soit par fibre optique, soit dans l'air grâce à des diodes électroluminescentes et capteurs photosensibles, telle une télécommande.

Selon une autre variante de réalisation le scanner et l'écran LCD sont reliés à travers le clavier et ses lecteurs. Le clavier, le scanner, l'écran LCD sont aussi amovibles, et rendent le terminal très modulable. En effet, on peut alors désolidariser chacun de ces éléments et les disposer à volonté.

Le clavier est alors relié par une seule liaison optique et/ou électrique à la partie standard de traitement.

Avantageusement un capot plastique ou autre peut venir se positionner au dessus du coffret. Ce capot comprend une partie amovible permettant d'avoir accès ou de rendre amovible le scanner, ainsi qu'une porte d'accès latéral permettant d'avoir accès aux connecteurs d'entrées/sorties des cartes disposés dans le bac.

Avantageusement le coffret est un coffret normalisable tout de suite, grâce au blindage électromagnétique modulaire ainsi réalisé.

Dans une variante de réalisation chaque carte comporte son blindage propre.

Avantageusement le terminal selon l'invention est sécurisé. Le circuit dédié peut exécuter en inteme, donc confidentiellement tout algorithme d'encryptage-décryptage, confidentialité, compression/décompression. La fonction d'encryptage-décryptage, confidentialité et/ou compression/décompression est réalisée par une puce de type carte à puce intégrée dans le circuit dédié. Dans une variante de réalisation la puce de type carte à puce peut être placée conjointement au circuit dédiée et non dans le circuit dédié.

Avantageusement la compression/décompression peut être séparée de la confidentialité.

Le terminal de l'invention présente donc les caractéristiques avantageuses suivantes :
- il utilise une carte mère standard utilisant les microprocesseurs standards du marché, par exemple Pentium et dérivés, ou Power PC et dérivés, d'architecture RISC, CISC ou autre.... ;
- il utilise un bus d'interfaçage normalisé ;
- il possède une configuration évolutive permettant l'auto-configuration (ou "plug-and-play").

Contrairement aux terminaux de l'art connu, le terminal de l'invention, hormis la carte mère et les cartes périphériques, comporte au moins une carte dédiée, sans microprocesseur standard ou du marché, mais avec au moins un circuit dédié (ASIC) permettant de réaliser les fonctions spécifiques du terminal, pouvant laisser le traitement logiciel évolué à la carte mère.

En résumé, il n'y a adjonction que d'une carte d'entrées/sorties spécifique au terminal de l'invention, à des coûts bien moindres qu'une carte dite "intelligente".

Avantageusement le terminal de l'invention peut être utilisé dans le domaine bancaire, dans le domaine des jeux et/ou de la gestion électronique de documents.

### Brève description des dessins

- La figure 1A illustre une vue éclatée du terminal de l'invention ;
- la figure 1B illustre une vue éclatée d'une variante du terminal de l'invention ;
- la figure 2 illustre une vue éclatée d'une partie du terminal de l'invention ;
- la figure 3 illustre une vue en coupe longitudinale du terminal de l'invention ;
- la figure 4 illustre une variante de positionnement de l'écran LCD ;
- la figure 5 illustre une variante de réalisation de la face supérieure au terminal de l'invention ;
- la figure 6 illustre un exemple de fonctionnement du terminal de l'invention ;
- la figure 7 illustre les fonctions spécifiques et les fonctions standards du terminal de l'invention ;
- la figure 8 représente un bloc diagramme de fonctionnement de la carte dédiée du terminal de l'invention.

### Exposé détaillé de modes de réalisation

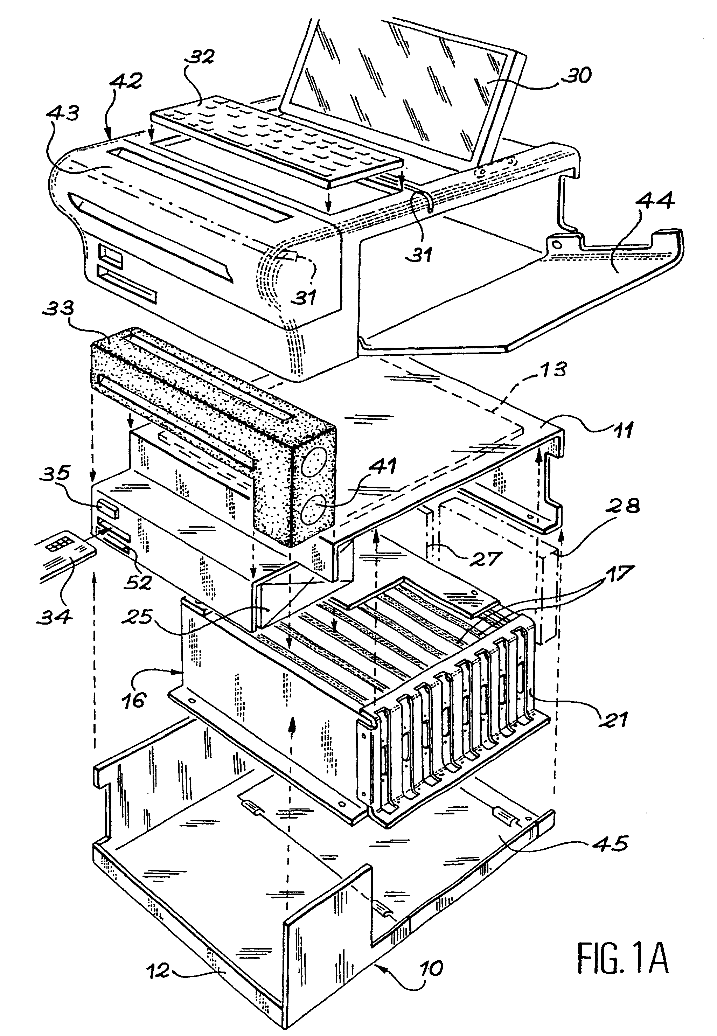

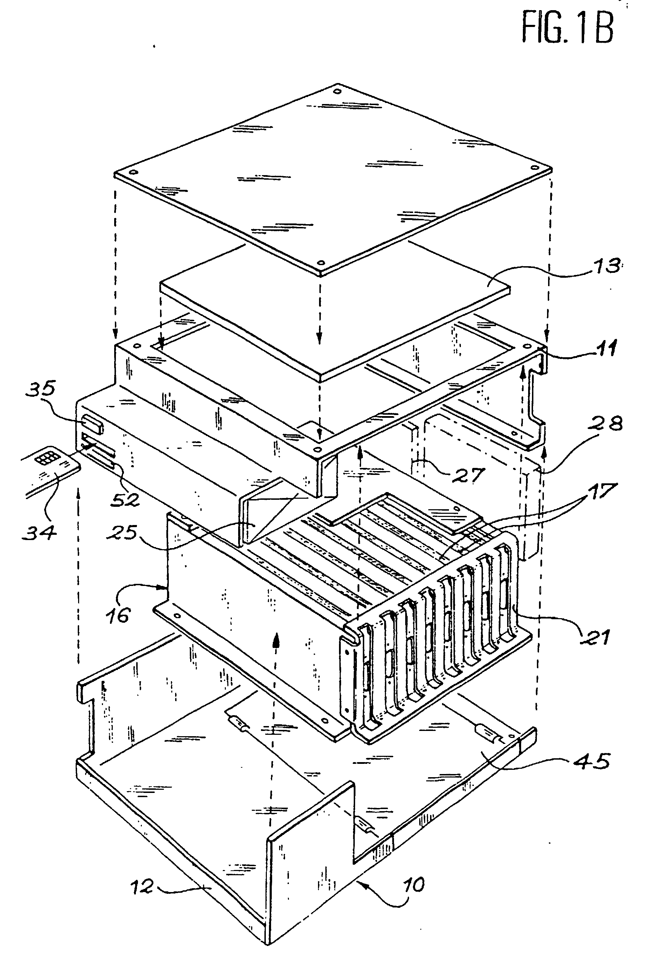

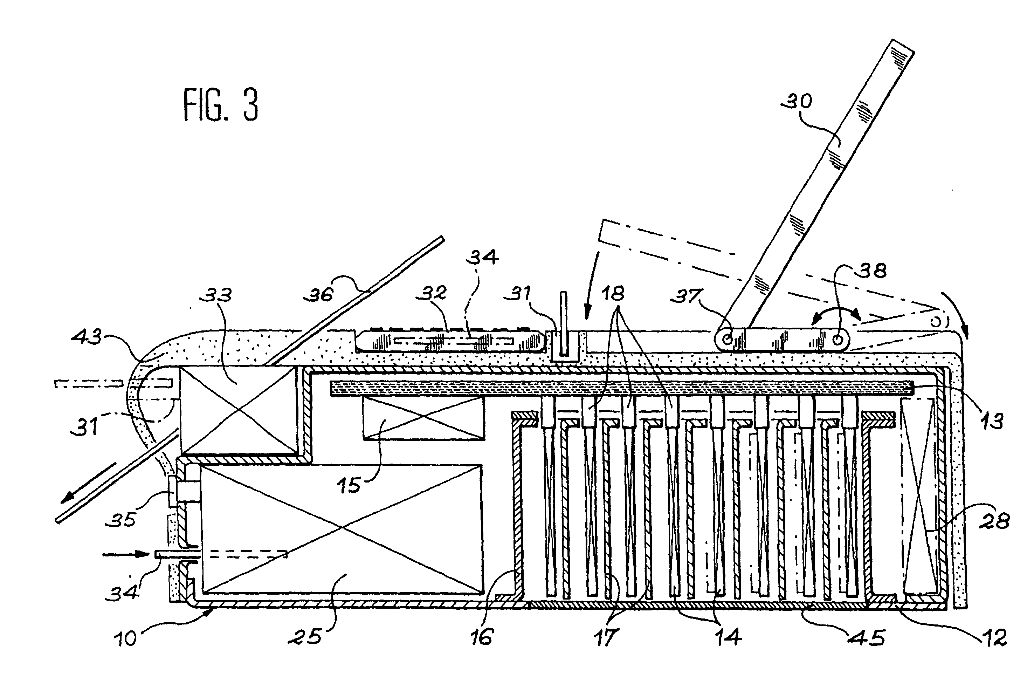

Comme représenté sur les figures 1 à 3 le terminal de l'invention comprend un coffret de forme parallélépipédique 10. Ce coffret est formé de la liaison d'une partie supérieure 11 et d'une partie inférieure 12. Dans ce coffret 10 est disposée une carte mère 13, avec les circuits 15 correspondants (mémoire, microprocesseur, ...), à laquelle peuvent être connectées des cartes filles 14 par l'intermédiaire de connecteurs 18.

Ces cartes filles 14 sont disposées dans un bac de blindage électromagnétique 16, amovible ou non, subdivisé en plusieurs compartiments par des cloisons amovibles 17, chaque carte fille 14 pouvant être insérée dans l'un de ces compartiments, et connectée à la carte mère 13 par un connecteur 18.

Ce bac 16 est formé de plusieurs éléments: un élément principal en forme de "u", 20, une face avant 21 percée d'ouvertures permettant de laisser passer les connecteurs d'entrées/sorties des cartes filles 14, une face supérieure 22 découpée de sorte à laisser la place aux connecteurs de la carte mère, la partie inférieure de ce bac 16 étant formé de la partie inférieure 12 du coffret 10 qui forme une porte amovible 45 rendant facilement accessible toute manipulation ou changement de carte 14.

Ce coffret 10 contient également au moins une alimentation 25, un lecteur de disque dur 27, et un lecteur de "floppy disc" (disque souple) 28.

Dans un mode de réalisation le disque dur est de 2,5 pouces (1 pouce = 2,54 cm), et dans un autre mode 1,8 pouce, mais tout type est possible. De même pour le lecteur de "floppy disk". L'interface de ces deux disques est standard.

Le disque dur peut également être géré de façon à ne fonctionner que le minimum de temps possible grâce à des fonctions intégrées au terminal. Ceci évite qu'en cas de choc, le disque tourne et fonctionne mal : par exemple le disque ne peut tourner qu'au chargement des différents logiciels, puis se mettre en sommeil, de même le soir lors du bilan des comptes de la journée. Le reste du temps il ne tourne pas.

Dans le terminal de l'invention le disque dur 27 permet, de façon avantageuse, une extension au moindre coût de la mémoire, DRAM ("Dynamic Random Access Memory" ou mémoire dynamique à accès aléatoire), FLASH, SRAM ou autre.

La figure 1B représente une variante de réalisation du terminal de l'invention. Le coffret est découpé au-dessus de la carte mère de façon à pouvoir sortir celle-ci. Dans ce cas le terminal est réalisé autour du bac.

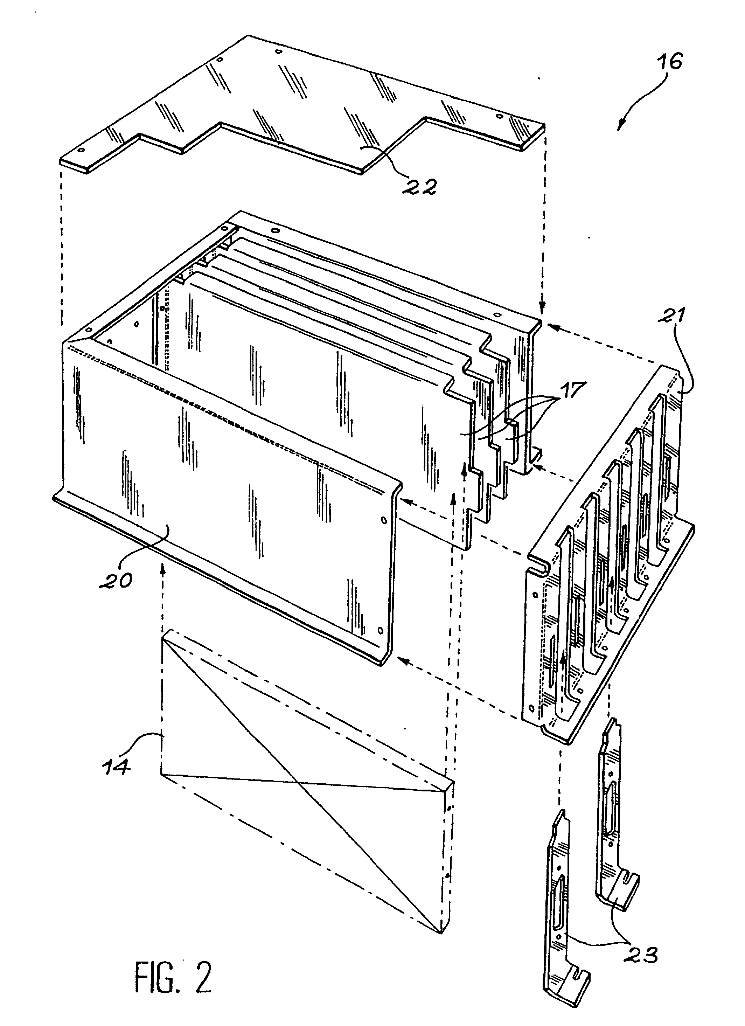

Sur la figure 2 sont également représentés des cornières 23 permettant le blindage électromagnétique et la fixation des extrémités des cartes filles 14.

A la surface supérieure de ce coffret 10 sont disposés un écran LCD 30, un lecteur de piste magnétique 31, un clavier à touches ou tactile 32, un scanner 33, un lecteur de PCMCIA 52.

Sur la face avant de ce coffret sont disposés un lecteur de carte à puce 34, un bouton arrêt-marche 35, et éventuellement : un lecteur de clé à puce, un lecteur de carte PCMCIA.

Dans une autre réalisation l'écran LCD est recouvert d'un capteur sensitif tactile qui vient s'ajouter ou non aux touches du clavier.

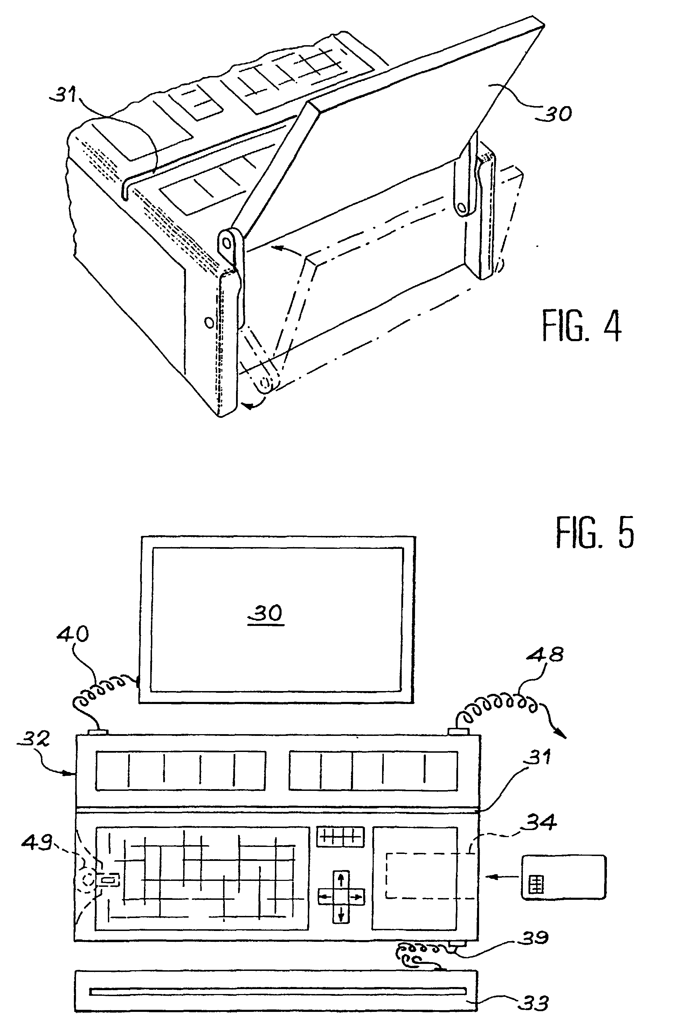

L'écran LCD 30 est fixé sur le coffret à l'aide d'un moyen mobile par exemple autour de deux axes de rotation 37 et 38, ce qui permet entre autres d'avoir, en position fermée, cet écran positionné sur la surface supérieure du coffret, et par conséquent protégé, et en position ouverte d'avoir cet écran en position oblique réglable permettant une lecture aisée par l'utilisateur. Dans une variante de réalisation l'écran LCD 30 est fixé sur la face arrière du coffret par des moyens le rendant mobile et lui permettant d'être protégé en position fermée, comme représenté sur la figure 4.

Le lecteur de piste magnétique 31, de forme allongée, comporte une glissière dans laquelle peut être lue une carte magnétique, par glissement. Un lecteur optique peut également être disposé à un quelconque endroit de cette glissière 40 pour pouvoir lire, par exemple, des codes à barres, OCR (reconnaissance optique de caractères) ou autre.....

Le clavier tactile et/ou à touches 32 peut être un clavier, formé d'une armature métallique sur laquelle est apposé un circuit imprimé comportant les touches, de type "Laptop" (portable).

Dans une autre variante de réalisation le lecteur de piste magnétique 31 et/ou le lecteur optique, le lecteur de carte à puce 34, le lecteur de puce de sécurisation 49 sont intégrés dans le clavier 32, comme représenté sur la figure 5.

Le clavier peut comprendre alors au moins une liaison 39 optique et/ou électrique vers le scanner 33, et au moins une liaison 40 optique et/ou électrique vers l'écran 32. Il y a plus qu'une liaison 48 électrique et/ou optique vers le coffret 10.

Le scanner 33, de forme allongée comporte un moteur 41 qui permet l'entraînement du document à lire 36.

Dans une variante de réalisation le moteur 41 du scanner 33 n'est pas en dessous du scanner mais dans le prolongement de celui-ci. Ce scanner est donc alors de forme allongée d'environ 30 cm de long d'un diamètre d'environ 60 mm, rond, ou multifacette, ou multifacette aux angles arrondis.

Un capot 42 peut venir se positionner au dessus du coffret 10. Il comprend une partie amovible 43 permettant la mobilité au scanner 33, ainsi qu'une porte d'accès latéral 44, permettant d'avoir accès à la connectique des cartes filles 14.

Le bouton arrêt-marche 35 permet d'alimenter ou non le terminal de l'invention.

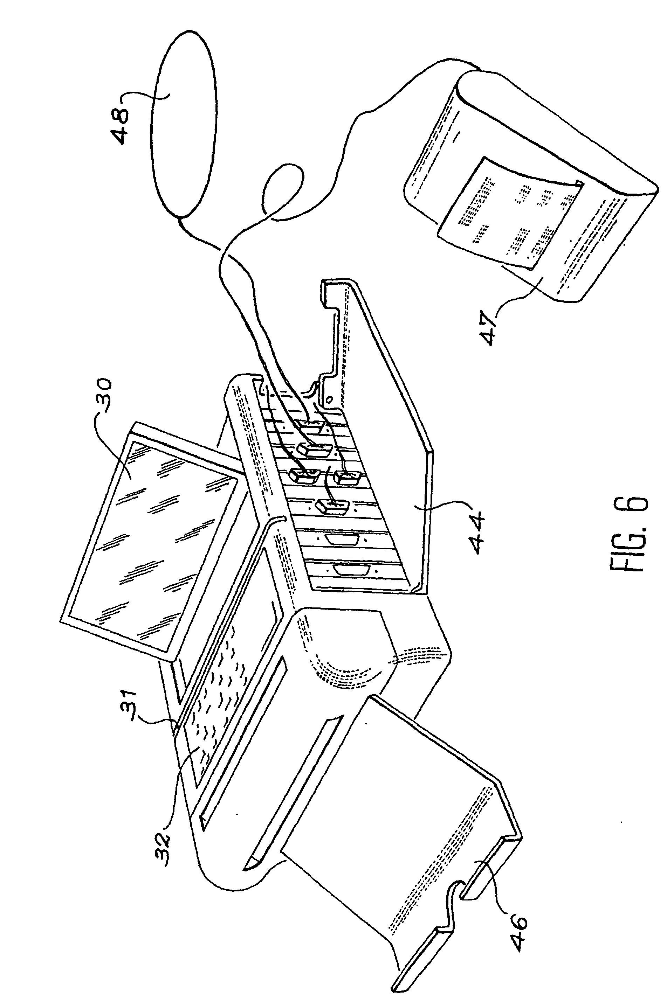

La figure 6 illustre un exemple de fonctionnement du terminal de l'invention. Un bac de réception 46 permet de recevoir les documents après lecture par le scanner 33. La porte d'accès latéral 44 permet de laisser passer les câbles de liaison, à l'arrière du terminal, pour toute liaison par exemple avec une imprimante 47, avec un réseau 48, ou autre....

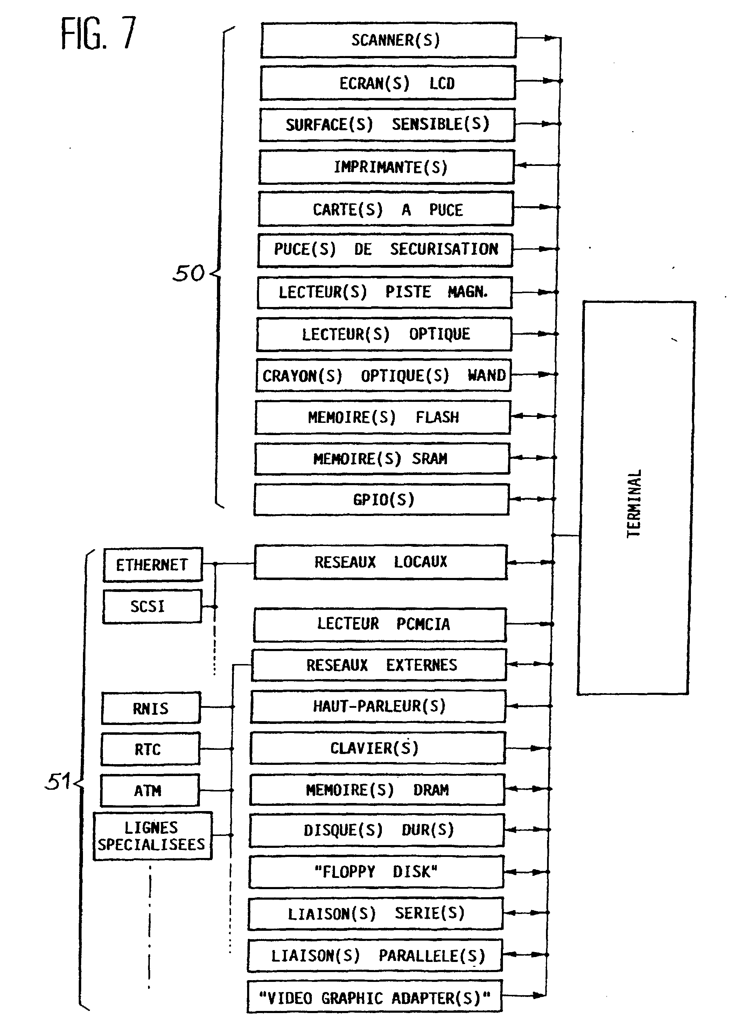

Comme représenté sur la figure 7, les fonctions spécifiques 50 du terminal bancaire de l'invention munies d'au moins une carte comprenant au moins un circuit spécifique, sont :
- le scanner ;
- le lecteur de carte à puce ;
- le lecteur de puce de sécurisation ;
- le lecteur de carte magnétique ;
- le lecteur optique ;
- l'écran LCD ;
- un écran tactile ;
- une imprimante rapide thermique, à jet d'encre, ou autre, reliée au terminal ;
- un crayon optique WAND ;
- des GPIO ("General Purpose Input/Output") par exemple pour commander : l'ouverture ou la fermeture d'un tiroir et, des liaisons-séries et/ou parallèles ;
- une ou plusieurs mémoires "Flash" (marque déposée Intel);
- une ou plusieurs mémoires SRAM ("Static Random Access Memory").

Les fonctions standards 51 sont, par contre :
- les réseaux locaux (Ethemet, SCSI.....) ;
- les réseaux externes RNIS (réseau numérique à intégration de service), RTC (réseau téléphonique commuté), ATM ("Asynchronous Transfer Mode"), LS (lignes spécialisées), protocole de type X25 (norme CCITT de transmission de signaux par paquets), X21 (norme CCITT de transmission de signaux par paquets) ou autre... ;
- un haut-parleur ;
- le clavier à touches et/ou tactile, ou non ;
- une ou plusieurs mémoires DRAM ("Dynamic RAM");
- le lecteur de disque dur;
- le lecteur de "floppy disk";
- les liaisons séries (RS 232 : norme EIA (Electrical Intematinal Association)) ;
- les liaisons parallèles ;
- la fonction VGA ("Vidéo Graphic Adapter", carte de gestion graphique couleur pour écran) ;
- un lecteur de PCMCIA.

Les fonctions spécifiques font l'objet de la réalisation d'un circuit intégré dédié de type ASIC ("Application Specific Integrated Circuit" ou circuit intégré pour application spécifique) qui gère toutes les informations desdites fonctions et qui les communique à la carte mère.

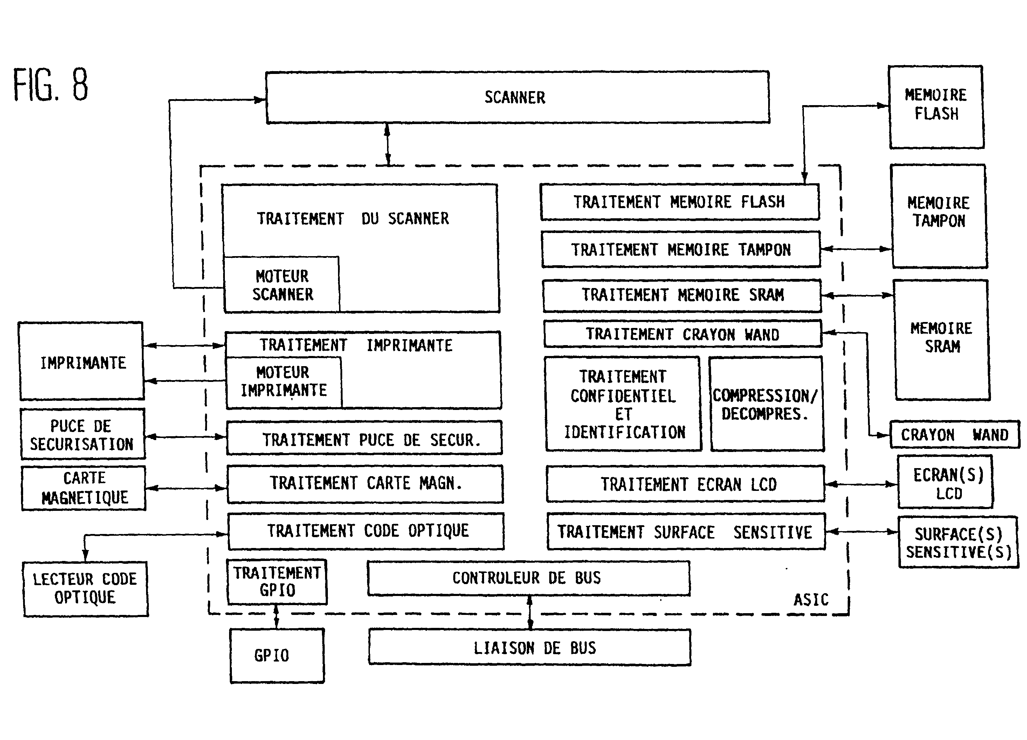

La fonction PCMCIA peut être soit spécifique, soit standard. Comme représenté sur la figure 8, le circuit dédié comprend notamment les modules de traitement en liaison respective avec chacune des fonctions spécifiques, plus la liaison à la partie standard.

Le terminal permet une grande sécurisation grâce à son circuit dédié. En effet, d'une part aucune des fonctions spécifiques du terminal réalisé ne peuvent être accomplies sans ce circuit.

D'autre part des codes ou des fonctions très complexes (par exemple polynomiales au autres, RSA, DES ("Data Encryption Standard" ou standard de cryptage de données) etc...) peuvent être injectés à la demande, puis exécutés dans le circuit dédié, en toute confidentialité.

Cette caractéristique peut être utilisée par exemple pour encrypter, décrypter les logiciels internes du terminal, ou tout ou partie de données circulant par ce terminal.

Dans une autre réalisation, la puce de sécurisation est remplacée par une puce type de carte à puce implantée soit dans le circuit dédié, soit conjointement. Cette puce permet alors de personnaliser et de confidentialiser tout ou partie d'informations internes, ou transitant par le terminal.

Toutes les autres fonctions standards 51 sont réalisées par des cartes filles standards du marché connectées à la carte mère.

Le coffret 10 associé au terminal de l'invention est un coffret normalisable tout de suite grâce au blindage électromagnétique ainsi réalisé et qui est nécessaire à ce type de terminal.

Chaque carte fille 14 comporte un compartiment blindé qui lui est affecté. Ce bac blindé est amovible et les compartiments sont individuels ou collectifs. Les blindages individuels, ou tout le blindage, peuvent être enlevés: ils sont modulaires.

Dans une variante de réalisation, on peut utiliser une ou plusieurs cartes comportant son blindage propre. Dans ce cas, on enlève une ou plusieurs cloisons correspondantes de blindage du bac.

Un tel coffret 10 permet une maintenance aisée, car chaque carte est accessible sans le démontage du terminal, une porte 45 étant prévue à cet effet.

De plus, chaque sous-ensemble, scanner, écran LCD, lecteur de cartes ou imprimante, de ce terminal est modulaire et peut être démonté individuellement pour constituer un terminal éclaté.

Dans un exemple de réalisation le terminal bancaire selon l'invention présente environ les dimensions suivantes 28 cm x 28 cm x 10 cm. Le scanner est alors compris dans un cylindre de diamètre inférieur à 60 mm . Le matériau de blindage électromagnétique est un matériau métallique dont au moins une composante est magnétisable.

Dans un autre mode de réalisation les fonctions spécifiques et standards sont réalisées sur une même carte, se substituant à la carte mère.

## Revendications

1. Terminal sécurisé multifonctions de saisie et de traitement utilisable notamment dans le domaine bancaire, dans le domaine des jeux, et/ou dans le domaine de la gestion électronique de documents, le terminal comprend des modules d'entrées/sorties pour réaliser des fonctions standards, un coffret (10) sur lequel, ou dans lequel, sont disposés les modules suivants : une alimentation (25), un lecteur de disque dur (27), un lecteur de "floppy disk" (28), un écran LCD (30), un lecteur de piste magnétique (31), un clavier à touches et/ou tactile (32), un lecteur de carte à puce (34), ainsi qu'une carte mère (13) à laquelle peut être connectée au moins une carte fille (14), grâce à un bus standard ;
**caractérisé en ce que** les cartes filles (14) sont disposées dans un bac de blindage électromagnétique (16), amovible, subdivisé en plusieurs compartiments par des cloisons amovibles (17), disposé dans le coffret, chaque carte fille (14) étant insérable dans l'un de ces compartiments,
et **en ce que** le terminal comprend :
au moins un module d'entrées/sorties spécifique, comportant un circuit dédié qui gère les informations préorganisées en temps réel concernant au moins une fonction spécifique et qui les communique à la carte mère de manière à laisser tout traitement logiciel évolué de ces informations à la carte mère, et **en ce que** un scanner de document (33), est aussi disposé sur, ou dans le coffret.

2. Terminal selon la revendication 1, dans lequel tous les modules d'entrées/sorties sont disposés sur une même carte, se substituant à la carte mère.

3. Terminal selon la revendication 1, dans lequel les modules d'entrées/sorties forment des cartes filles séparées (14), la carte mère (13) étant standard.

4. Terminal selon la revendication 1, dans lequel les fonctions spécifiques comprennent au moins : un scanner, et/ou un lecteur de carte à puce et/ou un lecteur de puce de sécurisation, et/ou un lecteur de pistes magnétiques ; et/ou un lecteur optique ; et/ou un écran LCD ; et/ou un clavier tactile ou non, et/ou une imprimante, et/ou de la mémoire Flash, et/ou de la mémoire SRAM, et/ou un crayon optique WAND, et/ou une surface tactile.

5. Terminal selon la revendication 1, dans lequel le coffret est un coffret de forme parallélépipédique (10), formé de la liaison d'une partie supérieure (11) et d'une partie inférieure (12), dans lequel est disposée la carte mère (13).

6. Terminal selon la revendication 1, dans lequel les signaux et les connecteurs des cartes filles sont normalisés.

7. Terminal selon la revendication 1, dans lequel le bac de blindage (16) est formé de plusieurs éléments : un élément principal (20), une première face (21) percée d'ouvertures permettant de laisser passer les connecteurs d'entrées/sorties des cartes filles (14), une seconde face (22) découpée de sorte à laisser la place aux connecteurs de la carte mère, une troisième face de ce bac (16) étant formée de la partie inférieure (12) du coffret (10) qui forme une porte amovible (45) rendant facilement accessible toute manipulation ou changement de carte fille (14).

8. Terminal selon la revendication 1 comprenant une porte d'accès latéral (44) permettant de laisser passer les câbles de liaison, à l'arrière du terminal, pour toute liaison notamment avec une imprimante (47), avec un réseau (48).

9. Terminal selon la revendication 1, dans lequel tous les modules disposés sur ou dans le coffret (10) sont amovibles.

10. Terminal selon la revendication 1, dans lequel un bouton marche-arrêt (35) est disposé conjointement à ce coffret.

11. Terminal selon la revendication 1, dans lequel l'écran LCD comporte une surface sensible, tactile ou non.

12. Terminal selon la revendication 11, dans lequel cette surface sensible permet de localiser n'importe quel point de l'écran, et d'effectuer tout traitement adéquat.

13. Terminal selon la revendication 1, dans lequel un écran LCD (30) est fixé au coffret à l'aide d'un moyen mobile par exemple autour de deux axes de rotation (37 et 38), ce qui permet entre autres d'avoir, en position fermée, cet écran positionné sur la surface supérieure du coffret et par conséquent protégé, et, en position ouverte, d'avoir cet écran en position réglable oblique permettant une lecture par l'utilisateur.

14. Terminal selon la revendication 1, dans lequel un écran LCD (30) est fixé sur la face arrière du coffret par des moyens le rendant mobile et lui permettant d'être protégé en position fermée

15. Terminal selon la revendication 1, dans lequel le lecteur de piste magnétique (31), le lecteur optique, le lecteur de carte à puce (34), le lecteur de puce de sécurisation (49) font partie d'un même ensemble que le clavier à touches ou tactile (32).

16. Terminal selon la revendication 1, dans lequel le clavier à touches ou tactile (32) est formé d'une armature métallique sur laquelle est déposé un circuit imprimé comportant les touches.

17. Terminal selon la revendication 1, dans lequel le clavier est protégé par une membrane étanche.

18. Terminal selon la revendication 16, dans lequel le circuit imprimé du clavier peut gérer soit le clavier, soit le (ou les) lecteur(s), le (ou les) écran(s), ou l'ensemble.

19. Terminal selon la revendication 15, dans lequel le clavier comprend au moins une liaison (39) optique et/ou électrique vers le scanner (33), au moins une liaison (40) optique et/ou électrique vers l'écran (30), et au moins une liaison (48) optique et/ou électrique vers le coffret(10).

20. Terminal selon la revendication 19, dans lequel la liaison optique s'effectue soit par fibre optique, soit dans l'air grâce à des diodes électroluminescentes et capteurs photosensibles telle une télécommande.

21. Terminal selon la revendication 1, dans lequel le lecteur de piste magnétique (31), de forme allongée, comporte une glissière dans laquelle peut être lue une carte magnétique par glissement.

22. Terminal selon la revendication 21, dans lequel un lecteur optique est également disposé dans la même glissière.

23. Terminal selon la revendication 21, dans lequel la glissière fait partie du clavier (32).

24. Terminal selon la revendication 1, dans lequel le scanner (33) est de forme allongée et peu encombrant.

25. Terminal selon la revendication 1, dans lequel le scanner est compris dans un cylindre de diamètre inférieur à 60 mm.

26. Terminal selon la revendication 1, dans lequel le scanner est un scanner recto et/ou verso.

27. Terminal selon la revendication 1, dans lequel le scanner est un scanner monochrome et/ou couleur.

28. Terminal selon la revendication 1, dans lequel le scanner (33) comprend au moins un capteur CIS ("Contact Image Sensor") ou NCIS ("No Contact Image Sensor").

29. Terminal selon la revendication 1, dans lequel le scanner comprend au moins un capteur CCD.

30. Terminal selon la revendication 1, comprenant un bac (46) de réception des documents après lecture par le scanner (33).

31. Terminal selon la revendication 1, dans lequel un capot (42) plastique ou autre est prévu pour venir se positionner autour du coffret (10).

32. Terminal selon la revendication 31, dans lequel ce capot comprend une partie amovible (43) permettant d'avoir accès ou de rendre amovible le scanner (33), ainsi qu'une porte d'accès latéral (44) permettant d'avoir accès aux connecteurs d'entrées/sorties des cartes filles (14) disposées dans le bac.

33. Terminal selon la revendication 1, dans lequel le coffret est un coffret normalisable tout de suite, grâce à son blindage modulaire électromagnétique.

34. Terminal selon la revendication 1, dans lequel chaque carte (14) comporte son blindage propre.

35. Terminal selon la revendication 1, dans lequel le matériau de blindage électromagnétique est un matériau métallique dont au moins une composante est magnétisable.

36. Terminal selon l'une quelconque des revendications précédentes, dans lequel le terminal est sécurisé.

37. Terminal selon la revendication 36, dans lequel la sécurisation est réalisée grâce au circuit dédié et peut exécuter en interne, donc confidentiellement, tout algorithme d'encryptage-décryptage, confidentialité, compression/décompression ou autre.

38. Terminal selon la revendication 37, dans lequel la fonction de sécurité, d'encryptage-décryptage, confidentialité, et/ou compression/décompression est réalisée par une puce type carte à puce intégrée dans le circuit dédié.

39. Terminal selon la revendication 36, dans lequel la compression/décompression est séparée de la confidentialité.

40. Terminal selon la revendication 38, dans lequel la puce de type carte à puce est placée conjointement au circuit et non dans le circuit dédié.

41. Terminal selon la revendication 1, dans lequel le scanner est de forme allongée d'environ 30 cm de long, d'un diamètre d'environ 60 mm, rond, ou multifacette, ou multifacette aux angles arrondis, le moteur du scanner étant situé dans le prolongement de celui-ci.

42. Terminal selon l'une quelconque des revendications précédentes, qui est utilisé dans une application bancaire.

43. Terminal selon l'une quelconque des revendications 1 à 41, qui est utilisé dans une application de jeux.

44. Terminal selon l'une quelconque des revendications 1 à 41, qui est utilisé dans une application de gestion électronique de documents.

## Claims

1. Securized, multifunction, acquisition and processing terminal more particularly usable in the banking sector, in connection with games and/or in the electronic management of documents, the terminal comprising input/output modules for performing standard functions, a box (10) in or on which are provided the following modules: a power supply (25), a hard disk reader (27), a floppy disk reader (28), a LCD (30), a magnetic track reader (31), a tactile and/or touch keypad (32), a chip card reader (34), as well as a mother board (13) to which can be connected at least one daughter board (14) by means of a standard bus, **characterized in that** the daughter boards (14) are placed in an electromagnetic shielding tray (16), which is removable and subdivided into several compartments by removable partitions (17) placed in the box, each daughter board (14) being insertable into one of said compartments and **in that** the terminal comprises at least one specific input/output module having a dedicated circuit, which manages the preorganized informations in real time concerning at least one specific function and which communicates them to the mother board in such a way as to leave to said mother board any developed software processing of said informations and **in that** a document scanner (33) is also placed in or on the box.

2. Terminal according to claim 1, wherein all the input/output modules are located on the same board taking the place of the mother board.

3. Terminal according to claim 1, wherein the input/output modules form separate daughter boards (14), the mother board (13) being standard.

4. Terminal according to claim 1, wherein the specific functions comprise at least one scanner and/or a chip card reader and/or a securizing chip reader and/or a magnetic track reader and/or ap optical reader, and/or a LCD, and/or a tactile or non-tactile keypad, and/or a printer and/or a Flash memory, and/or a SRAM, and/or a light pen and/or a tactile surface.

5. Terminal according to claim 1, wherein the box is a parallelepipedic box (10) formed from the connection of an upper part (11) and a lower part (12) in which is placed a mother board (13).

6. Terminal according to claim 1, wherein the signals and connectors of the daughter boards are standardized.

7. Terminal according to claim 1, wherein the shielding tray (16) is formed from several elements, namely a main element (20), a first face (21) having openings for the passage of the input/output connectors of said daughter boards (14), a second face (22) cut as to give space for the connectors of the mother board, a third face of said tray (16) being formed from the lower part (12) of the box (10), which forms a detachable door (45) giving easy access for any manipulation or change of daughter board (140.

8. Terminal according to claim 1, comprising a lateral access door (44) for the passage of the connecting cables to the rear of the terminal for any connection, particularly with a printer (47) or a network (48).

9. Terminal according to claim 1, wherein all the modules placed on or in the box (10) are detachable.

10. Terminal according to claim 1, wherein a stop-go button (35) is arranged jointly with said box.

11. Terminal according to claim 1, wherein the LCD has a tactile or non-tactile, sensitive surface.

12. Terminal according to claim 1, wherein said sensitive surface makes it possible to locate any random point of the screen and perform any adequate processing.

13. Terminal according to claim 1, wherein a LCD (30) is fixed to the box with the aid of a mobile means, e.g. around two rotation axes (37, 38), which inter alia makes it possible to have, in the closed position, the display located on the upper surface of the box and consequently protected and, in the open position, to have said display in an oblique, regulatable position permitting a reading by the user.

14. Terminal according to claim 1, wherein a LCD (30) is fixed to the rear face of the box by means making it mobile and giving it protection in the closed position.

15. Terminal according to claim 1, wherein the magnetic track reader (31), the optical reader, the chip card reader (34), the securizing chip reader (49) form part of the same assembly as the touch or tactile keypad (32).

16. Terminal according to claim 1, wherein the touch or tactile keypad (32) is formed by a metal fitting on which is deposited a printed circuit having the keys.

17. Terminal according to claim 1, wherein the keypad is protected by a tight membrane.

18. Terminal according to claim 16, wherein the printed circuit of the keypad can manage either the keypad, or the reader or readers.

19. Terminal according to claim 15, wherein the keypad has at least one optical and/or electrical connection (39) to the scanner (33), at least one optical and/or electrical connection (40) to the display (32) and at least one optical and/or electrical connection (48) to the box (10).

20. Terminal according to claim 19, wherein the optical connection is either by fibre optics, or in air by means of light emitting diodes and photosensitive sensors such as a remote control.

21. Terminal according to claim 1, wherein the elongated, magnetic track reader (31) has a slide in which can be read by sliding a magnetic card.

22. Terminal according to claim 21, wherein an optical reader is also located in the same slide.

23. Terminal according to claim 21, wherein the slide forms part of the keypad (32).

24. Terminal according to claim 1, wherein the scanner is elongated and has small overall dimensions.

25. Terminal according to claim 1, wherein the scanner is comprised in a cylinder of diameter below 60 mm.

26. Terminal according to claim 1, wherein the scanner is a front and/or back scanner.

27. Terminal according to claim 1, wherein the scanner is a black and white and/or colour scanner.

28. Terminal according to claim 1, wherein the scanner (33) comprises at least one contact image sensor (CIS) or no contact image sensor (NCIS).

29. Terminal according to claim 1, wherein the scanner comprises at least one charge coupled device (CCD).

30. Terminal according to claim 1, comprising a tray (46) for receiving documents after reading by the scanner (33).

31. Terminal according to claim 1, wherein a plastic or other cover (42) can be positioned around the box (10).

32. Terminal according to claim 31, wherein said cover has a detachable part (43) giving access or rendering detachable the scanner (33), as well as a lateral access door (44) giving access to the input/output connectors of the daughter boards (14) located in the tray.

33. Terminal according to claim 1, wherein the box is an immediately standardizable box by means of its electromagnetic, modular shielding.

34. Terminal according to claim 1, wherein each board (14) has its own shielding.

35. Terminal according to claim 1, wherein the electromagnetic shielding material is a metallic material, whereof at least one component is magnetizable.

36. Terminal according to any one of the preceding claims, wherein the terminal is securized.

37. Terminal according to claim 36, wherein securizing can be brought about by means of the dedicated circuit, so as to permit the internal and therefore confidential execution of any encrypting/decrypting, confidentiality, compressing/decompressing or other algorithm.

38. Terminal according to claim 37, wherein the encrypting-decrypting, confidentiality and/or compressing/decompressing security function is performed by a chip card type chip integrated into the dedicated circuit.

39. Terminal according to claim 36, wherein the compression-decompression is separate from the confidentiality.

40. Terminal according to claim 38, wherein the chip card type chip is positioned jointly with the circuit and not in the dedicated circuit.

41. Terminal according to claim 1, wherein the scanner is elongated, approximately 30 cm long, with a diameter of approximately 60 mm, round or multifacet, or multifacet with rounded angles, the motor of the scanner being located in the extension thereof.

42. Terminal according to any one of the preceding claims, which is used in a banking application.

43. Terminal according to any one of the claims 1 to 41, which is used in an application to games.

44. Terminal according to any one of the claims 1 to 41, which is used in an electronic document management application.

## Patentansprüche

1. Gesichertes Multifunktions-Datenerfassungs- und - verarbeitungs-Endgerät das insbesondere im Bankenbereich, auf dem Gebiet der Spiele und/oder auf dem Gebiet der elektronischen Dokumentenverwaltung verwendbar ist, wobei das Endgerät Eingabe-/Ausgabemodule zur Ausführung von Standardfunktionen sowie ein Gehäuse (10) umfaßt, an oder in dem die folgenden Module angeordnet sind: eine Energiequelle (25), ein Festplattenlaufwerk (27), ein "Floppy-Disk"-Laufwerk (28), ein LCD-Bildschirm (30), ein Magnetband-Lesegerät (31), eine Tastatur mit Tasten und/oder mit Berührung (32), ein Chipkarten-Lesegerät (34) sowie eine Stamm- bzw. Mutterkarte (13), mit der mindestens eine Tochterkarte (14) mittels eines Standard-Bus verbunden sein kann,
**dadurch gekennzeichnet, daß** die Tochterkarten (14) in einem herausnehmbaren elektromagnetischen Abschirmungsbehälter (16) angeordnet sind, der durch herausnehmbare Trennwände (17) in mehrere Fächer unterteilt und im Gehäuse angeordnet ist, wobei jede Tochterkarte (14) in eines dieser Fächer einführbar ist, und
daß das Endgerät mindestens ein spezifisches Eingabe-/Ausgabemodul aufweist, welches eine dedizierte Schaltung umfaßt, die in Echtzeit vororganisierte Informationen, welche mindestens eine spezifische Funktion betreffen, steuert bzw. verwaltet, und die sie der Mutterkarte übermittelt, so daß die gesamte Softwarebearbeitung dieser Informationen auf höherer Stufe der Mutterkarte überlassen wird, und daß auch ein Dokumenten-Scanner (33) an oder in dem Gehäuse angeordnet ist.

2. Endgerät nach Anspruch 1, wobei alle Eingabe-/Ausgabemodule auf einer gleichen Karte angeordnet sind, welche die Mutterkarte ersetzen.

3. Endgerät nach Anspruch 1, wobei die Eingabe-/Ausgabemodule getrennte Tochterkarten (14) bilden, und die Mutterkarte (13) die Standardkarte ist.

4. Endgerät nach Anspruch 1, wobei die spezifischen Funktionen mindestens umfassen: einen Scanner und/oder ein Chipkarten-Lesegerät und/oder ein Sicherheits-Chipkarten-Lesegerät und/oder ein Magnetband-Laufwerk, und/oder ein optisches Laufwerk, und/oder einen LCD-Bildschirm, und/oder ein Berührungs- oder Nicht- Berührungs-Tastenfeld, und/oder einen Drucker, und/oder einen Flash-Speicher, und/oder einen SRAM-Speicher, und/oder einen optischen WAND-Stift, und/oder eine Berührungsfläche.

5. Endgerät nach Anspruch 1, wobei das Gehäuse ein Gehäuse (10) von Parallelepipedform ist, das aus der Verbindung eines oberen Teils (11) und eines unteren Teils (12) gebildet ist und in dem die Mutterkarte (13) angeordnet ist.

6. Endgerät nach Anspruch 1, wobei die Signale und die Anschlussverbinder der Tochterkarten genormt sind.

7. Endgerät nach Anspruch 1, wobei der Abschirmungsbehälter (16) aus mehreren Elementen gebildet ist: einem Hauptelement (20), einer ersten Seite (21), die von Öffnungen durchsetzt ist, welche die Eingangs-/Ausgangs-Anschlussverbinder der Tochterkarten (14) passieren lassen, einer zweiten Seite (22), die derart geschnitten ist, daß sie den Verbindern der Mutterkarte Platz läßt, wobei eine dritte Seite dieses Behälters (16) aus dem unteren Teil (12) des Gehäuses (10) gebildet ist, der eine abnehmbare Tür (45) bildet, welche die Tochterkarte (14) bei jeder Handhabung oder Änderung leicht zugänglich gestaltet.

8. Endgerät nach Anspruch 1 mit einer lateralen Zugangstür (44), welche die Verbindungskabel passieren läßt, hinter dem Endgerät für alle Verbindungen, insbesondere mit einem Drucker (47) und mit einem Netz (48).

9. Endgerät nach Anspruch 1, wobei alle an oder in dem Gehäuse (10) angeordnete Module abnehmbar/herausnehmbar sind.

10. Endgerät nach Anspruch 1, wobei ein Ein-/Ausschaltknopf (35) zusammen mit diesem Gehäuse angeordnet ist.

11. Endgerät nach Anspruch 1, wobei der LCD-Bildschirm eine empfindliche Oberfläche zur Berührung oder nicht umfaßt.

12. Endgerät nach Anspruch 11, wobei es diese empfindliche Oberfläche ermöglicht, irgendeinen Punkt des Bildschirms zu lokalisieren und jede adäquate Bearbeitung durchzuführen.

13. Endgerät nach Anspruch 1, wobei ein LCD-Bildschirm (30) mit Hilfe eines beispielsweise um zwei Drehachsen (37 und 38) mobilen Mittels befestigt ist, was es unter anderem gestattet, dass dieser Bildschirm in der geschlossenen Position an der oberen Oberfläche des Gehäuses und folglich geschützt positioniert ist, und dieser Bildschirm sich in der offenen Position in einer verstellbaren Schrägstellung befindet, welche dem Benutzer das Lesen ermöglicht.

14. Endgerät nach Anspruch 1, wobei ein LCD-Bildschirm (30) auf der Rückseite des Gehäuses durch Mittel befestigt ist, die ihn beweglich machen und es ermöglichen, daß er in geschlossener Position geschützt ist.

15. Endgerät nach Anspruch 1, wobei das Magnetband-Lesegerät (31), das optische Lesegerät, das Chipkarten-Lesegerät (34) und das Sicherheits-Chipkarten-Lesegerät (49) zu ein und derselben Einheit wie die Tasten- oder Berührungs-Tastatur (32) gehören.

16. Endgerät nach Anspruch 1, wobei die Tasten- oder Berührungs-Tastatur (32) aus einer Metallarmatur gebildet ist, auf der eine die Tasten aufweisende gedruckte Schaltung aufgebracht ist.

17. Endgerät nach Anspruch 1, wobei die Tastatur durch eine dichte Membran bzw. Haut geschützt ist.

18. Endgerät nach Anspruch 16, wobei die gedruckte Schaltung der Tastatur entweder die Tastatur oder das (bzw. die) Lesegerät(e), den (bzw. die) Bildschirm(e) oder alle zusammen steuern kann.

19. Endgerät nach Anspruch 15, wobei die Tastatur mindestens eine optische und/oder elektrische Verbindung (39) zum Scanner (33), mindestens eine optische und/oder elektrische Verbindung (40) zum Bildschirm (30) und mindestens eine optische und/oder elektrische Verbindung (48) zum Gehäuse (10) aufweist.

20. Endgerät nach Anspruch 19, wobei die optische Verbindung entweder über eine optische Faser oder in der Luft Dank Leuchtdioden und photoempfindlicher Sensoren wie eine Fernsteuerung erfolgt.

21. Endgerät nach Anspruch 1, wobei das Magnetband-Lesegerät (31) von länglicher Form ein Schubfach umfaßt, in dem eine magnetische Karte durch Einschieben gelesen werden kann.

22. Endgerät nach Anspruch 21, wobei ein optisches Lesegerät auch in diesem Schubfach angeordnet ist.

23. Endgerät nach Anspruch 21, wobei das Schubfach einen Teil der Tastatur (32) bildet.

24. Endgerät nach Anspruch 1, wobei der Scanner (33) eine längliche Form aufweist und wenig Platz einnimmt.

25. Endgerät nach Anspruch 1, wobei der Scanner in einem Zylinder eines Durchmessers unter 60 mm aufgenommen ist.

26. Endgerät nach Anspruch 1, wobei der Scanner ein Einseiten- und/oder Zweiseiten-Scanner ist.

27. Endgerät nach Anspruch 1, wobei der Scanner ein monochromer und/oder Farbscanner ist.

28. Endgerät nach Anspruch 1, wobei der Scanner (33) mindestens einen CIS-Fühler (CIS = Contact Image Sensor) oder einen NCIS-Sensor (NCIS = No Contact Image Sensor) umfaßt.

29. Endgerät nach Anspruch 1, wobei der Scanner mindestens einen CCD-Sensor aufweist.

30. Endgerät nach Anspruch 1, mit einem Behälter (46) zur Aufnahme der Dokumente nach dem Lesen durch den Scanner (33).

31. Endgerät nach Anspruch 1, wobei eine Abdeckung (42) aus Kunststoff oder anderem Material vorgesehen ist, um um das Gehäuse (10) herum positioniert zu werden.

32. Endgerät nach Anspruch 31, wobei die Abdeckung einen abnehmbaren Teil (43), der den Zugang zum oder das Herausnehmen des Scanners (33) ermöglicht, sowie eine laterale Zugangstür (44), die den Zugang zu den Eingangs-/Ausgangs-Anschlussverbindern der in dem Behälter angeordneten Tochterkarten (14) ermöglicht, aufweist.

33. Endgerät nach Anspruch 1, wobei das Gehäuse ein dank seiner modularen elektromagnetischen Abschirmung sofort normierbares Gehäuse ist.

34. Endgerät nach Anspruch 1, wobei jede Karte (14) ihre eigene Abschirmung aufweist.

35. Endgerät nach Anspruch 1, wobei das Material zur elektromagnetischen Abschirmung ein metallisches Material ist, von dem mindestens ein Bestandteil magnetisierbar ist.

36. Endgerät nach einem der vorangehenden Ansprüche, wobei das Endgerät gesichert ist.

37. Endgerät nach Anspruch 36, wobei die Sicherung mittels einer dedizierten Schaltung erfolgt und im Innern und damit vertraulich jeden Verschlüsselungs-Entschlüsselungs-Algorithmus, alle vertraulichen Daten, eine Kompression/Dekompression u.a. ausführen kann.

38. Endgerät nach Anspruch 37, wobei die Sicherheitsfunktion, die Funktion der Verschlüsselung-Entschlüsselung, der Geheimhaltung und/oder der Kompression/Dekompression von einem Chip von der Art einer in die dedizierte Schaltung integrierten Chipkarte realisiert ist.

39. Endgerät nach Anspruch 36, wobei die Kompression/Dekompression von der Geheimhaltung getrennt ist.

40. Endgerät nach Anspruch 38, wobei der Chip von der Art einer Chipkarte gemeinsam mit der Schaltung und nicht in der dedizierten Schaltung angebracht ist.

41. Endgerät nach Anspruch 1, wobei der Scanner eine längliche Form von etwa 30 cm Länge und einem Durchmesser von etwa 60 mm aufweist und eine runde oder mit Mehrfachfacetten versehene oder mit Mehrfachfacetten mit abgerundeten Winkeln versehene Form hat, wobei der Motor des Scanners in dessen Verlängerung gelegen ist.

42. Endgerät nach einem der vorangegangenen Ansprüche, das in einer Bankanwendung eingesetzt wird.

43. Endgerät nach einem der Ansprüche 1 bis 41, das in einer Spielanwendung eingesetzt wird.

44. Endgerät nach einem der Ansprüche 1 bis 41, das in einer elektronischen Dokumente-Verwaltungsanwendung eingesetzt wird.
